# EUROPEAN PATENT APPLICATION

(11) **EP 1 365 347 A1**
(43) Date of publication of application: **26.11.2003**
(21) Application number: 03016700.1
(22) Date of filing: 18.06.1998
(51) Int. Cl.: G06K 9/00

(54) **Electroluminescent fingerprint apparatus and method**

(30) Priority: 27.06.1997 US 883154
(62) Divisional of application: 98930210.4
(71) Applicant: Security First Corporation, Rancho Santa Margarita, CA 92679 (US)
(72) Inventor: La Freniere, Jon E., Dallas, Texa 75219 (US); Rowley, Stephen H., Plano, Texas 75074 (US)
(74) Representative: Beyer, Andreas, Dr.

(57) **Abstract**

The invention relates to an electroluminescent fingerprint machine (100) and method for generating at least one electroluminescent fingerprint (104). The electroluminescent fingerprint machine includes an AC power source (108) having an output voltage with a predetermined frequency. A lead (110) from the AC power source connects to an electroluminescent material. Then an individual completes the electrical circuit between the AC power source and the electroluminescent material by placing one finger onto a contact area of the electroluminescent material and a body part to a ground tab of the AC power source such that at least one electroluminescent fingerprint appears on a front side of the electroluminescent material.

## Description

### TECHNICAL FIELD

The present invention relates to an electroluminescent fingerprint machine and method for generating an electroluminescent fingerprint and, more particularly, to an electroluminescent fingerprint machine coupled to a computer that stores a digitized image of the electroluminescent fingerprint.

### BACKGROUND OF THE INVENTION

Biometrics is a term used to refer to the statistical analysis of biological observations which includes the gathering and comparison of fingerprints to ascertain the identity of an individual. There are numerous applications in fields such as criminal investigations and personal/corporate security that may incorporate the verification of an individual's identity based upon a fingerprint. The applications involving criminal investigations are well known.

Verification of an individual's identity based upon a fingerprint within the personal and corporate environments is a valuable and useful tool. For example, verification of an individual's identity may reduce the fraud associated with improper use of credit cards. Also, a security system installed in an automobile may include a fingerprint-verification process where only pre-selected individuals may enter and operate the automobile. Applications within the corporate environment may include a fingerprint-identification system that maintains and controls security clearance and access to buildings, networks and databases.

As is well known, the conventional manner of gathering an individual's fingerprint was to place ink on a finger of the individual and then roll the finger over a piece of paper to create an image of the fingerprint. Using the ink and paper combination is very messy and susceptible to the image of the fingerprint being smeared. An optical scanner is then used to illuminate the image of the fingerprint such that a digitized image is captured by the computer. The digitized image is then stored within the computer.

A relatively new scanner is currently available that obtains a digitized image of a fingerprint without requiring the use of ink and paper. The scanner utilizes a moving light source to illuminate the fingerprint that is then transformed into a digitized image. The digitized image from the scanning process is then stored in a computer. The scanner utilizes moving components, which makes the scanner susceptible to mechanical failure. An example of a new scanner discussed above is manufactured by IDENTIX Corporation.

Accordingly there is a need for a fingerprint machine that generates an electroluminescent fingerprint. Also there is a need for a fingerprint machine incorporated with a computer system that verifies the identity of an individual. These and other needs are satisfied by the fingerprint machine of the present invention.

### SUMMARY OF THE INVENTION

The present invention is an electroluminescent fingerprint machine and method for generating at least one electroluminescent fingerprint. The electroluminescent fingerprint machine includes an AC power source having an output voltage with a predetermined frequency. A lead from the AC power source connects to an electroluminescent material. Then an individual completes the electrical circuit between the AC power source and the electroluminescent material by placing one finger onto a contact area of the electroluminescent material and another body part to a ground tab of the AC power source such that at least one electroluminescent fingerprint appears on a front side of the electroluminescent material.

According to the present invention there is provided a fingerprint machine that is economical to manufacture.

Also in accordance with the present invention there is provided a fingerprint machine that operates at a voltage level that does not pose a safety concern to an individual.

Further in accordance with the present invention there is provided a fingerprint machine simple to operate and relatively portable.

Further in accordance with the present invention there is provided a method for generating at least one electroluminescent fingerprint.

### BRIEF DESCRIPTION OF THE DRAWINGS

A more complete understanding of the invention may be had by reference to the following Detailed Description when taken in conjunction with the accompanying Drawings wherein:
FIGURE 1 is a block diagram of a fingerprint machine of the present invention that generates an electroluminescent fingerprint; and
FIGURE 2 is a block diagram where the fingerprint machine of FIGURE 1 is incorporated with a computer system.

### DETAILED DESCRIPTION OF THE DRAWINGS

Referring co the Drawings, wherein like numerals represent like parts throughout the several views, there is disclosed an electroluminescent fingerprint machine 100 in accordance with the present invention.

Although a preferred embodiment of the fingerprint machine 100 incorporated with a computer system 200 used to verify the identity of an individual 102 will be described, chose skilled in the art will appreciate that such application is only one of many utilizing the fingerprint machine 100. Accordingly, the fingerprint machine 100 described should not be construed in a limited manner.

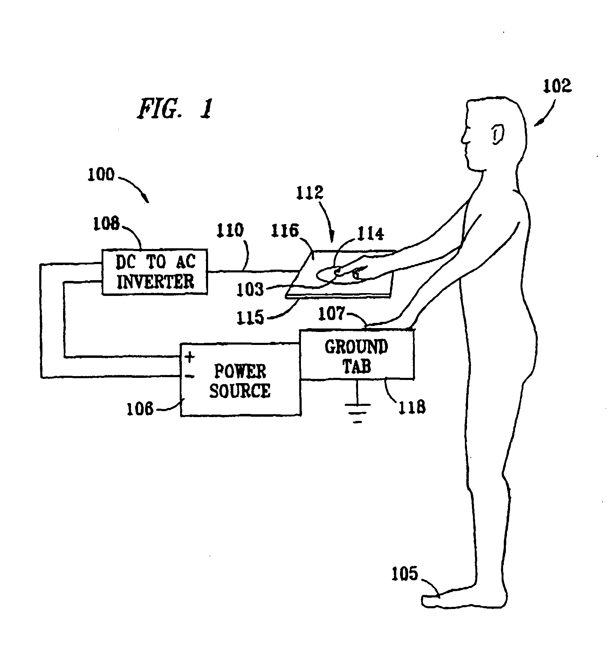

Referring to FIGURE 1, there is illustrated a block diagram of the fingerprint machine 100 that generates an electroluminescent fingerprint 104. The fingerprint machine 100 includes a power source 106 electrically connected to an inverter 108 which in combination forms an alternating current (AC) power source. The power source 106 is preferably a battery that outputs direct current (DC) to the inverter 108 which in turn converts DC to AC power and generates an output voltage having a predetermined frequency. The output voltage may be any voltage in which it is safe for the individual 102 to contact. While the predetermined frequency is generally in the range of 400-1000Hz.

The inverter 108 is connected by a single lead 110 to an electroluminescent material 13.2. The electroluminescent material 112 emits a light produced by luminescence, which results from applying alternating current to a layer of phosphor. The electroluminescent material 112 has a contact area 114 where insulation 116 has been removed thereby permitting contact to an electrically alive portion of the electroluminescent material. The light produced by the luminescence is preferably green, however, other colors are permissible. The electroluminescent material 112 may be of the type manufactured by Electroluminescent: Technologies Corporation and identified under the trademark NovaLite.

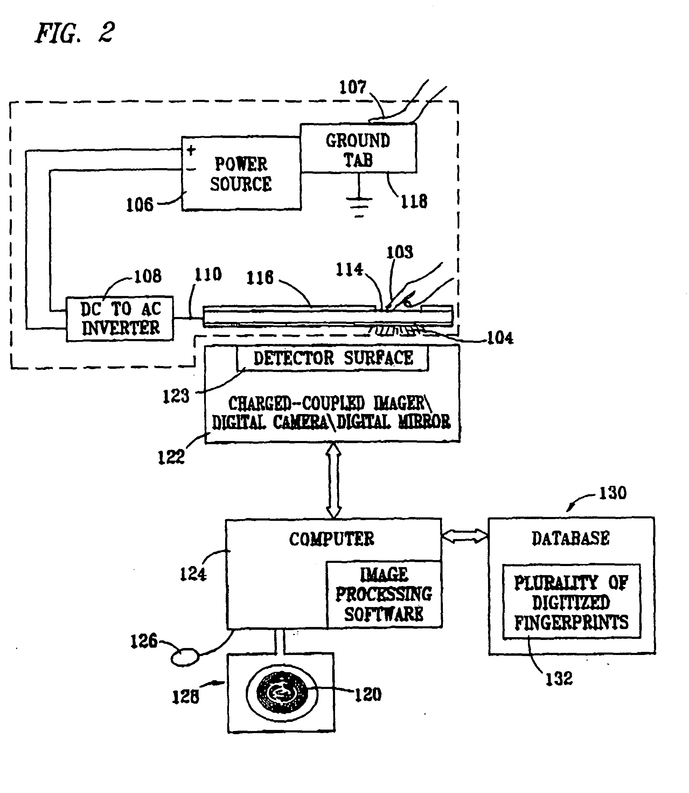

The electroluminescent fingerprint 104 is generated when the individual 102 applies a finger 103 to the contact area 114 located on the electroluminescent material 112 and also contacts a ground tab 118 of the power source 106 such chat the individual has completed an electrical circuit between, the power source and the electroluminescent material. A foot 105 or a finger on another hand 107 of the individual 102 may be used to contact the ground tab 118. After completing the electrical circuit, the electroluminescent fingerprint 104 (see FIGURE 2) of the individual 102 is illuminated on a front side 115 of the electroluminescent material 112.

Referring to FIGURE 2, there is illustrated the fingerprint machine 100 incorporated with a computer system 200. The computer system 200 is interfaced with the fingerprint machine 100 such that the electroluminescent fingerprint 104 is captured as a digitized image 120. A charge-coupled imager 122 positioned near the front side 115 of the electroluminescent material 112 may be used to convert the electroluminescent fingerprint 104 into the digitized image 120. A digital camera or digital mirror (see Figure 2) are also considered functional equivalents to the charge-coupled imager 122.

The charge-coupled imager 122 generates a digital exposure or the digitized image 120 from an analog image of the electroluminescent fingerprint 104 by the use of a detector surface 123. The detector surface 123 has thousands of pixels that store electrons in response to photons that are emitted by the electroluminescent fingerprint 104. The stored electrons located in the pixels are representative of the electroluminescent fingerprint 104 and are used to generate the digitized image 120. The greater number of electrons scored in each pixel the greater the intensity or brightness of a particular portion of the electroluminescent fingerprint 104.

The charge-coupled imager 122 further includes image. processing software that can transform a relatively "poor" digitized image 120 into a "good" digitized image by substantially reducing undesirable interferences such as dark current. The dark current is further reduced by using thermoelectric cooling to maintain a predetermined temperature on the detector surface. Also, the charge-coupled imager 122 includes flat-field compensation and built-in blooming correction to increase the accuracy of the digitized image 120. The charge-coupled imager 122 may be of the type manufactured by Meade Instruments Corporation and identified as Meade Pictor XT-Series CCD Autoguider/Imagers.

A computer 124 stores the image processing software and is coupled to the charge-coupled imager 122. The computer 124 may be a personal computer or a mainframe computer depending upon the particular application. Centering and focusing of the digitized image 120 within the charge-coupled imager 122 may be accomplished by software in that a user (not shown) need only to click a mouse 126 indicated on a display 128 of the computer 124.

The computer 124 includes files or a database 130 that contains a plurality of digitized fingerprints 132. Each digitized fingerprint 132 corresponds to a particular person whose identify is known. The digitized image 120 of the individual 102 is preferably included within the plurality of digitized fingerprints 132. The computer 124 then functions to compare the digitized image 120 of the individual 102 to the plurality of digitized fingerprints 132 stored in the database 130 to find a match and ascertain the identity of the individual. If no match is found, the digitized image 120 is still stored in the computer 124 for future reference.

In verifying the identity of the individual 102 software within the computer 124 compares several types of identifying characteristics associated with the digitized image 120 to that of the plurality of digitized fingerprints 132. The identifying characteristics of a fingerprint include minutiae (i.e. a ridge end or a bifurcation), the location of the minutiae, the direction in which the minutiae are pointing, and the intervening ridge counts. For most law enforcement applications a minimum of eight minutiae must be in full coincident sequence to confirm the identity of the individual 102. Commercial applications may be less strict in the comparison analysis.

The software may also be configured to generate a list identifying people from the plurality of digitized fingerprints 132 that most closely resembles the digitized fingerprint 120. Thereafter, a user may make manual comparisons between the generated list of the digitized fingerprints 132 to the digitized image 120 to determine or verify the identity of the individual 102.

While the present invention has been described with reference to the illustrated embodiment, it is not intended to limit the invention but, on the contrary, it is intended to cover such alternatives, modifications and equivalents as may be included in the spirit and scope of the invention as defined in the following claims.

## Claims

1. An electroluminescent fingerprint machine (100) comprising:
- means for producing an output voltage having a predetermined frequency; and
- an electroluminescent material (112) connected to one lead from the means for producing, where an individual (102) completes the electrical circuit between the electroluminescent material (112) and the means for producing by placing one finger onto a contact area (114) of the electroluminescent material (112) and a body part to a ground tab of the means for producing such that an electroluminescent fingerprint (104) appears on a front side of the electroluminescent material (112).

2. The electroluminescent fingerprint machine in accordance with Claim 1 further comprising means adjacent the electroluminescent material (112) for capturing a digitized image (120) of the electroluminescent fingerprint (104).

3. The electroluminescent fingerprint machine in accordance with Claim 2 wherein the means for capturing further includes a charge-coupled imager (122).

4. The electroluminescent fingerprint machine in accordance with Claim 2 wherein the means for capturing further includes a digital camera.

5. The electroluminescent fingerprint machine in accordance with Claim 2 wherein the means for capturing further includes a digital mirror.

6. The electroluminescent fingerprint machine in accordance with Claim 2 further comprising a computer (124) that stores the digitized image (120), said computer (124) coupled to the means for capturing.

7. The electroluminescent fingerprint machine in accordance with Claim 6 wherein said computer (124) further includes a plurality of digitized fingerprints (132) stored in the computer (124), each digitized fingerprint (132) corresponds to a particular person, said plurality of digitized fingerprints (132) includes the digitized image (120).

8. The electroluminescent fingerprint machine in accordance with Claim 7 wherein said computer (124) further includes means for comparing the plurality of digitized fingerprints (132) to the digitized image (120) until the identity of the individual (102) has been ascertained.

9. The electroluminescent fingerprint machine in accordance with Claim 7 wherein said computer (124) further includes means for comparing the plurality of digitized fingerprints (132) to the digitized image (120) and generating a list identifying the digitized fingerprints (132) that are substantially similar to the digitized image (120).

10. The electroluminescent fingerprint machine in accordance with Claim 1 wherein said means for producing further includes means for adjusting the predetermined frequency, wherein the brightness of the digitized image (120) relates to the predetermined frequency.

11. The electroluminescent fingerprint machine in accordance with Claim 1 wherein the electroluminescent material (112) further includes at least one layer of phosphor.

12. The electroluminescent fingerprint machine in accordance with Claim 1 wherein the means for producing further includes a power source (106) coupled to an inverter (108).

13. The electroluminescent fingerprint machine in accordance with any one of Claims 1 to 12 wherein the body part is a finger or a foot or another body part.

14. The electroluminescent fingerprint machine in accordance with Claim 13 wherein the body part is a finger on another hand.

15. A method for generating at least one electroluminescent fingerprint (104) comprising the steps of:
- producing an output voltage having a predetermined frequency;
- connecting a single lead of the output voltage to an electroluminescent material (112);
- applying at least one finger of an individual (102) to a contact area (114) of the electroluminescent material (112); and
- completing an electrical circuit between the output voltage, the electroluminescent material (112), and the individual (102). such that the at least one electroluminescent fingerprint (104) appears on a front side of the electroluminescent material (112).

16. The method in accordance with Claim 15 further comprising a step of capturing a digitized image (120) of the at least one electroluminescent fingerprint (104).

17. The method in accordance with Claim 16 further comprising a step of inputting the digitized image (120) into a computer (124).

18. The method in accordance with Claim 17 further comprising a step of storing in the computer (124) a plurality of digitized fingerprints (132), each digitized fingerprint (132) corresponds to a particular person and said plurality of digitized fingerprints (132) includes the digitized image (120).

19. The method in accordance with Claim 18 further comprising:
- comparing the plurality of digitized fingerprints (132) to the digitized image (120); and
- confirming the identity of the individual (102).

20. The method in accordance with Claim 18 further comprising:
- comparing the plurality of digitized fingerprints (132) to the digitized image (120); and
- generating a list of the plurality of digitized fingerprints (132) that are substantially similar to the digitized image (120).

21. The method in accordance with Claim 15 wherein the step of producing further includes adjusting the predetermined frequency, wherein the brightness of the digitized image (120) relates to the predetermined frequency.

22. An apparatus for obtaining at least one electroluminescent fingerprint from an individual (102) comprising:
- an alternating current power source (106) that outputs an AC voltage having a predetermined frequency;
- an electroluminescent material (112) connected to a lead from the power source (106), where the individual (102) completes the electrical circuit between the electroluminescent material (112) and the power source (106) by placing one finger onto a contact area (114) of the electroluminescent material (112). and a body part to a ground tab of the power source (106) such that said at least one electroluminescent fingerprint (104) appears on a front side of the electroluminescent material; and
- an imaging device adjacent the front side of the electroluminescent material (112), said imaging device captures a digitized image (120) of the at least one electroluminescent fingerprint (104).

23. The apparatus in accordance with Claim 22 further including a computer (124) electrically connected to the imaging device for storing the digitized image (120) and a plurality of digitised fingerprints, each digitized fingerprint image corresponds to a particular person, said computer (124) further compares the plurality of digitized fingerprints (132) to the digitized image (120) until the identity of the individual (102) has been ascertained.

24. The apparatus in accordance with Claim 23 wherein said computer (124) further includes means for comparing the plurality of digitized fingerprints (132) to the digitized image (120) and generating a list of the plurality of digitized fingerprints (132) that are substantially similar to the digitized image (120).

25. The apparatus in accordance with Claim 23 wherein said power source (106) is electrically connected to an inverter (108) and said inverter (108) further includes means for adjusting the predetermined frequency, wherein the brightness of the digitized image (120) relates to the predetermined frequency.

26. The apparatus in accordance with Claim 22 wherein the imaging device is a digital camera, a charge coupled device or a digital mirror.

27. The apparatus in accordance with Claim 22 wherein the body part is a finger or a foot or another body part.

28. The apparatus in accordance with Claim 27 wherein the body part is a finger on another hand.
